# EUROPÄISCHE PATENTSCHRIFT

(11) **EP 2 791 409 B1**
(45) Veröffentlichungstag und Bekanntmachung des Hinweises auf die Patenterteilung: **09.12.2015**
(21) Anmeldenummer: 13712167.9
(22) Anmeldetag: 11.03.2013
(51) Int. Cl.: B29C 70/50, D04H 3/04, D04H 5/03, D04H 3/10, B29C 70/20, D04H 3/03, B32B 5/26, B29C 70/08, D04H 5/02, D04H 13/00

(54) **FLÄCHIGER VERBUNDWERKSTOFF**
FLAT COMPOUND MATERIAL
MATIÈRE PREMIÈRE COMPOSITE PLATE

(30) Priorität: 09.03.2012 EP 12158958
(43) Veröffentlichungstag der Anmeldung: 22.10.2014
(73) Patentinhaber: Quadrant Plastic Composites AG, 5600 Lenzburg 1 (CH)
(72) Erfinder: BASER, Burak, CH-4663 Aarburg (CH)
(74) Vertreter: Schmauder & Partner AG Patent- & Markenanwälte VSP
(86) Internationale Anmeldenummer: PCT/EP2013/054844
(87) Internationale Veröffentlichungsnummer: WO 2013/132095

(56) Entgegenhaltungen:
- EP-A2- 0 323 571
- DE-A1- 3 941 189
- GB-A- 879 024
- GB-A- 2 173 828
- GB-A- 2 237 583
- US-A- 5 910 458

## Beschreibung

Die Erfindung betrifft einen flächigen Verbundwerkstoff mit mindestens einer Schicht A aus unidirektionalen Verstärkungsfaser-Rovings und mindestens einer Schicht B aus einem Thermoplastfaser-Vlies oder einem Thermoplastfaser-Gelege, die gegebenenfalls Verstärkungsfasern enthalten können, wobei die Schichten A und B miteinander vernadelt sind.

Thermoplastische Kunststoffe werden wegen ihres geringen Gewichts in zunehmendem Masse zur Herstellung von Bauteilen, insbesondere für Kraftfahrzeugteile verwendet. Um ihnen eine ausreichende Steifigkeit und Festigkeit zu verleihen, werden sie gewöhnlich mit Verstärkungsfasern verbunden. So werden z.B. flächige Halbzeuge aus glasmattenverstärkten Thermoplasten (GMT-Halbzeuge) hergestellt durch Zusammenführen von Endlos-Glasfasermatten und Thermoplast-Schmelzebahnen und Konsolidieren auf einer Doppelbandpresse. Diese Arbeitsweise erfordert jedoch einen hohen Energieaufwand, da die vergleichsweise zähflüssige Schmelze bei Drücken weit oberhalb von 1 bar in die Matte eingepresst werden muss. Ausserdem ist die Verstärkung ungerichtet, während im Kraftfahrzeugbereich gerade eine Verstärkung in einer oder mehreren Vorzugsrichtungen erwünscht ist.

Dies ist bei dem Verbundwerkstoff nach WO 2006/111037 der Fall. Dort ist ein thermoplastisch verarbeitbarer Verbundwerkstoff beschrieben, umfassend eine Faservliesschicht aus Thermoplastfasern und gegebenenfalls Verstärkungsfasern und eine Gewebe- oder Gelegeschicht aus Verstärkungsfasern, die vorzugsweise miteinander vernadelt sind. Gelege sind vorgefertigte Fasergebilde, bei denen mehrere Lagen unidirektionaler Faser-Rovings durch Nähfäden dicht und fest miteinander verwirkt sind. Die Herstellung derartiger Fasergebilde ist recht aufwendig, ausserdem werden bei der Vernadelung der Schichten wegen der festen Bindung der Rovings durch die Nähfäden diese Rovings nicht ausreichend weit geöffnet, so dass sie nur unzureichend und ungleichmässig mit dem Thermoplasten imprägniert werden, wodurch die mechanischen Eigenschaften daraus hergestellter Formkörper negativ beeinflusst werden.

Die EP-A 323 571 betrifft ein faserverstärktes, thermoplastisch verformbares Halbzeug, enthaltend ein durch Nadeln fixiertes flächiges Fasergebilde, bestehend aus:
- mindestens zwei Schichten A aus orientierten Endlosfasern mit einem Flächengewicht von maximal 300 g/m², und
- mindestens einer Schicht B aus nicht orientierten Fasern.

Das textile Flächengebilde von EP-A 323 571 enthält vorzugsweise Glasfasern, es sind aber auch Fasern wie Kohlenstoff-Fasern sowie Fasern aus aromatischen Polyamiden oder anderen Thermoplasten erwähnt. Allerdings ist nicht spezifiziert, ob diese Thermoplastfasern in Schicht A oder in Schicht B oder in beiden Schichten enthalten sein können. Zur Herstellung des Halbzeugs wird das textile Flächengebilde in einem zweiten, gesonderten Verfahrensschritt mit einer Thermoplastschmelze imprägniert und zu einem festen Halbzeug verpresst, so dass im anschliessenden dritten Schritt die Halbzeuge zu thermoplastischen Bauteilen verarbeitet werden können. Um hierbei eine gute Durchtränkung zu gewährleisten, sieht EP-A 323 571 zwingend vor, dass das Flächengewicht der Schicht(en) A nicht grösser als 300 g/m² sein darf.

Die GB 2 237 583 beschreibt ein Verfahren zur Herstellung eines Prepregs, bei dem kontinuierlich auf unidirektionalen Verstärkungsfasern thermoplastische Bindefasern aufgestreut werden und mit diesen zusammen konsolidiert und zu einem Profil oder einem flächigen Halbzeug verpresst werden. Eine Vernadelung ist nicht angesprochen.

Der Erfindung lag somit die Aufgabe zu Grunde, Verbundwerkstoffe auf Basis von unidirektionalen Faser-Rovings bereitzustellen, die diese Nachteile nicht aufweisen und direkt, ohne gesonderten zweiten Verfahrensschritt nach textiler Gebildeherstellung wie er gemäss der EP-A 323 571 erforderlich ist, zu Formteilen verarbeitet werden können.

Es wurde nun gefunden, dass diese Aufgabe gelöst wird, wenn man statt eines Fasergeleges direkt diskrete, nicht miteinander verbundene Verstärkungsfaser-Rovings (sog. "unidirektionale Fasern", im Folgenden als "UD-Fasern" bezeichnet) verwendet und diese mit einer Wirrfaser-Schicht zusammennadelt.

Gegenstand der Erfindung ist demzufolge ein flächiger Verbundwerkstoff, umfassend
A. mindestens eine UD-Faser-Schicht mit einem Flächengewicht von mehr als 300 bis 2'000 g/m² aus diskreten, nicht miteinander verbundenen, unidirektionalen Verstärkungsfaser-Rovings, und
B. mindestens eine Wirrfaser-Schicht mit einem Flächengewicht von 100 bis 2'000 g/m² aus einem Thermoplastfaser-Vlies oder einem Thermoplastfaser-Gelege, die bis zu 70 Gew.-% Verstärkungsfasern enthalten können, wobei die Schichten A und B miteinander vernadelt sind.

Die erfindungsgemässen Verbundwerkstoffe weisen bevorzugt die Schichtenfolge A - B auf, grundsätzlich sind aber auch andere Schichtenfolgen, beispielsweise A - B - A oder A - B - A - B möglich.

Bei einer ersten, bevorzugten Ausgestaltung der Erfindung besteht die Wirrfaser-Schicht B aus einem Thermoplastfaser-Vlies, z.B. einem Nadelvlies oder einem ungenadelten Krempel- oder Airlay-Vlies mit Flächengewichten von 100 bis 2'000 g/m², vorzugsweise von 200 bis 1'200 g/m² und insbesondere von 300 bis 1'000 g/m². Das Thermoplastfaser-Vlies besteht vorzugsweise zu 100% aus Thermoplastfasern, es kann aber auch bis zu 70 Gew.-%, insbesondere 30 bis 70 Gew.-% Verstärkungsfasern enthalten. Sowohl die Thermoplastfasern als auch die Verstärkungsfasern weisen vorzugsweise eine Länge von 20 bis 100 mm auf.

Als Thermoplastfasern der Wirrfaserschicht B kommen alle verspinnbaren thermoplastischen Kunststoffe in Frage, vorzugsweise Polypropylen mit einem MFI (230°C, 2.16 kp) von 25 bis 150 g/10 min, insbesondere ein unmodifiziertes, d.h. Carboxylgruppen-freies Polypropylen, sowie Polyamide, wie Polyamid-6 und Polyamid-6,6, daneben aber auch lineare Polyester, Polysulfone, Polyketone und Polyetherimide. Die Thermoplastfasern sind als "Bindefasern" vorgesehen, d.h. sie sollen im Zuge der Weiterverarbeitung des erfindungsgemässen Verbundwerkstoffes thermoplastisch zu einer Matrix verformbar sein.

Bevorzugte Verstärkungsfasern sind Glasfasern und Kohlenstofffasern, daneben sind auch Naturfasern und Basaltfasern sowie Fasern aus hochschmelzenden Thermoplasten wie Aramid geeignet. Im vorliegenden Zusammenhang ist der Begriff "hochschmelzend" in Relation zu den als Bindefasern, d.h. zur Bildung einer Polymermatrix vorgesehenen Thermoplastfasern zu verstehen. Insbesondere soll in der Wirrfaserschicht B der Schmelz- bzw. Erweichungspunkt der Verstärkungsfasern deutlich höher, beispielsweise mindestens 50°C höher sein als derjenige der Thermoplastfasern.

Zusätzlich kann der Verbundwerkstoff eine verhältnismässig dünne Faser-Schicht C aus ungerichteten Verstärkungsfasern mit einem Flächengewicht von 50 bis 500 g/m², vorzugsweise von 100 bis 300 g/m² auf der von der Schicht A abgewandten Seite der Schicht B enthalten, so dass sich eine Schichtenfolge A - B - C ergibt. Diese Schicht C bewirkt eine zusätzliche Verstärkung des Verbundwerkstoffs, was dann wichtig wird, wenn ein Faservlies mit verhältnismässig geringem Flächengewicht eingesetzt wird. Als ungerichtete Fasern kommen insbesondere Glasfasern oder Kohlenstofffasern in Frage.

Bei einer zweiten Ausgestaltung besteht die Wirrfaser-Schicht B aus einem Thermoplastfaser-Gelege mit endlosen Thermoplastfasern, das gegebenenfalls auch endlose Verstärkungsfasern enthalten kann. Bevorzugte Thermoplastfasern sind Polypropylenfasern mit einem Titer von 600 bis 2'400 dtex, die mit üblichen Stabilisatoren und Haftvermittlern ausgerüstet sein können.

Bevorzugt ist, dass der Verbundwerkstoff ausschliesslich Schichten A und B, sowie gegebenenfalls C, jedoch keine weiteren andersartigen Schichten enthält.

Der erfindungsgemässe Verbundwerkstoff enthält vorzugsweise 30 bis 80 Gew.-%, insbesondere 50 bis 70 Gew.-% UD-Fasern. Sein Flächengewicht beträgt vorzugsweise mehr als 400 bis 4'000 g/m², insbesondere 1'000 bis 2'000 g/m². Im nicht-konsolidierten Zustand ist er vorzugsweise 5 bis 15 mm dick.

Die Verstärkungsfaser-Rovings sind beispielsweise Glas-, Kohlenstoff-, Aramid- oder Basaltfasern mit einem Titer von vorzugsweise 100 bis 4'800 tex, insbesondere 200 bis 3'000 tex. Besonders bevorzugt sind Kohlenstofffasern. Verbundwerkstoffe auf dieser Basis weisen eine besonders hohe Steifigkeit in Längsrichtung und eine sehr gute Flexibilität auf. Das Flächengewicht der Schicht A beträgt mehr als 300 bis 2'000 g/m², vorzugsweise 350 bis 2'000 g/m². Aus Verbundwerkstoffen mit relativ schweren UD-Fasern hergestellte Bauteile zeigen bessere Festigkeiten als solche mit leichten UD-Fasern, wie sie beispielsweise in EP-A 323 571 beschrieben sind. Darüber hinaus lassen sich derartige schwerere Verbundwerkstoffe, insbesondere wenn sie nur zwei Lagen A-B aufweisen, besser handhaben als leichtere.

Besonders bevorzugte Verbundwerkstoffe enthalten als UD-Fasern Kohlenstofffasern, und die Faservlies-Schicht enthält als thermoplastischen Kunststoff ein Polyamid, insbesondere Polyamid-6, sowie 30 bis 70 Gew.-% Kohlenstofffasern. Dabei können mit Vorteil recyclierte Kohlenstofffasern eingesetzt werden, die z.B. aus zerkleinerten, mit Kohlenstofffasern verstärkten Fertigteilen durch bekannte Recyclierverfahren erhalten wurden. Derartige Verbundwerkstoffe sind gut temperaurbeständig.

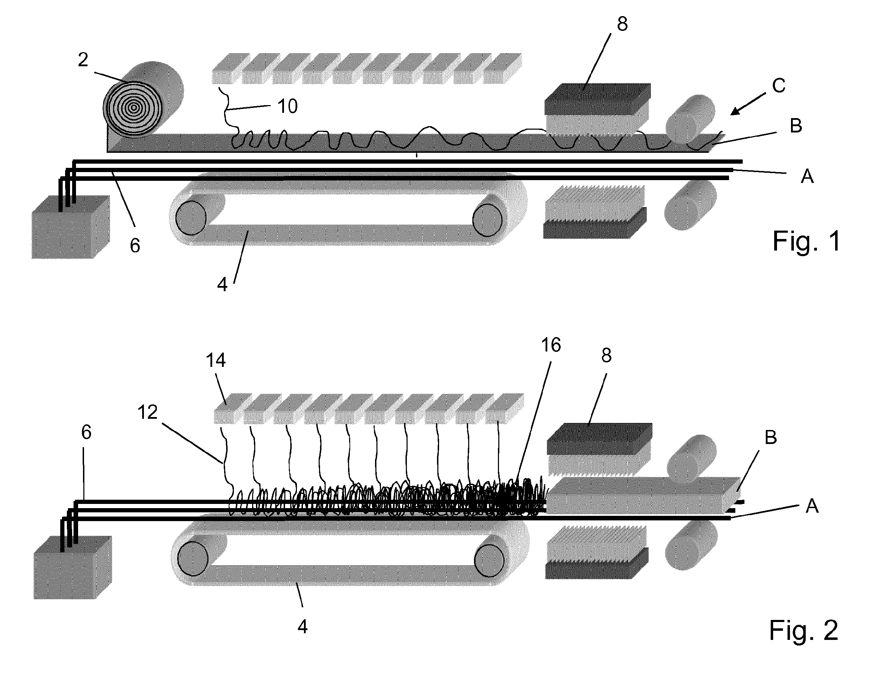

Eine Ausführungsform des Verfahrens zur Herstellung von Verbundwerkstoffen gemäss der ersten Ausgestaltung ist in der Figur 1 als perspektivische Darstellung gezeigt. Zunächst wird eine Faservlies-Schicht nach dem Krempel- oder Airlay-Verfahren hergestellt und zu einem Nadelvlies 2 vernadelt. Auf einem umlaufenden Endlos-Band 4 werden erst die UD-Fasern 6 nebeneinander abgelegt, vorzugsweise möglichst bündig, unter Bildung einer Schicht A. Darauf wird dann kontinuierlich das vorgefertigte Nadelvlies 2 unter Bildung einer Schicht B abgelegt, und die beiden Schichten A, B werden anschliessend in einer Nadelvorrichtung 8 miteinander vernadelt.

Es ist auch möglich, ohne Nadelung ein nach dem Airlay- oder Krempel-Verfahren hergestelltes Vlies direkt auf den UD-Fasern abzulegen und dann erst zu nadeln.

Wenn der Verbundwerkstoff weitere Schichten A bzw. B enthalten soll, können die entsprechenden Bahnen zusätzlich zugeführt und mitvernadelt werden.

Falls der Verbundwerkstoff zusätzlich eine dünne Schicht C enthalten soll, werden auf das Faservlies der oberen Schicht B die Wirrfasern 10 der Schicht C als Endlosmatte abgelegt oder als Schnittfasern aufgestreut. Alle drei Schichten werden dann miteinander vernadelt. In der Figur 1 ist dies schematisch dargestellt.

Figur 2 zeigt perspektivisch eine weitere Ausführungsform des Verfahrens zur Herstellung von Verbundwerkstoffen gemäss der zweiten Ausgestaltung. Auf einem umlaufenden Endlos-Band 4 werden zunächst die UD-Fasern 6 der Schicht A abgelegt, darauf werden dann Thermoplastfasern 12 sowie gegebenenfalls Verstärkungsfasern aus traversierenden Feedern 14 unter Bildung eines Geleges 16 entsprechend der Schicht B abgelegt, und die Schichten A, B werden anschliessend in einer Nadelvorrichtung 8 miteinander vernadelt. Dies ist in der Figur 2 schematisch dargestellt.

Die erfindungsgemässen Verbundwerkstoffe können zu dünnen Platten geschnitten werden. Diese Zuschnitte können dann direkt zu dreidimensionalen Bauteilen verarbeitet werden, indem man sie in einer Form bei Temperaturen oberhalb des Erweichungspunktes des Thermoplasten der Wirrfaserschicht B verpresst. Man kann aber auch ein Halbzeug herstellen, indem die flächige Verbundwerkstoff-Bahn z. B. auf einer Doppelbandpresse bei Temperaturen oberhalb des Erweichungspunktes des Thermoplasten der Wirrfaserschicht B und bei Drücken von 0.5 bis 5 bar kontinuierlich konsolidiert wird. Auch ein Verpressen auf Kaschiereinrichtungen ist möglich. Das konsolidierte Halbzeug hat eine Dicke von vorzugsweise 0.3 bis 5.0 mm, insbesondere von 1.0 bis 3.0 mm. Es ist auch möglich, Zuschnitte aus den Verbundwerkstoffen zur gezielten Verstärkung von Faserverbund-Formteilen zu verwenden, indem man sie zusammen mit z.B. GMT- oder NMT-Halbzeugen (d.h. Halbzeugen auf Basis von glasmattenverstärkten bzw. naturfasermatten-verstärkten Thermoplasten) in eine Form einlegt und zusammen mit diesen verpresst.

Die aus den erfindungsgemässen Verbundwerkstoffen hergestellten Fertigteile sind besonders leicht und hochsteif. Sie können als Kraftfahrzeugteile, für Sportartikel, im Eisenbahnwaggonbau und im Flugzeugbau verwendet werden.

## Patentansprüche

1. Flächiger Verbundwerkstoff, umfassend
a) mindestens eine UD-Faser-Schicht A mit einem Flächengewicht von mehr als 300 bis 2'000 g/m² aus diskreten, nicht miteinander verbundenen unidirektionalen Verstärkungsfaser-Rovings (6), und
b) mindestens eine Wirrfaser-Schicht B mit einem Flächengewicht von 100 bis 2'000 g/m² aus einem Thermoplastfaser-Vlies (2) oder einem Thermoplastfaser-Gelege (16), die jeweils bis zu 70 Gew.-% Verstärkungsfasern enthalten können
wobei die Schichten A und B miteinander vernadelt sind.

2. Verbundwerkstoff nach Anspruch 1, **dadurch gekennzeichnet, dass** er die Schichtenfolge A - B aufweist.

3. Verbundwerkstoff nach Anspruch 1, **dadurch gekennzeichnet, dass** die Wirrfaser-Schicht B aus einem Thermoplastfaser-Vlies gebildet ist, das ein Nadelvlies oder ein ungenadeltes Krempel- oder Airlay-Vlies ist, welches aus Thermoplastfasern gebildet ist und gegebenenfalls 30 bis 70 Gew.-% Verstärkungsfasern enthält.

4. Verbundwerkstoff nach Anspruch 3, **dadurch gekennzeichnet, dass** er zusätzlich eine Faser-Schicht C aus ungerichteten Verstärkungsfasern mit einem Flächengewicht von 50 bis 500 g/m² auf der von der Schicht A abgewandten Seite der Schicht B enthält.

5. Verbundwerkstoff nach Anspruch 1, **dadurch gekennzeichnet, dass** die Wirrfaser-Schicht B aus einem Thermoplastfaser-Gelege aus endlosen Thermoplastfasern gebildet ist und gegebenenfalls endlose Verstärkungsfasern enthält.

6. Verbundwerkstoff nach Anspruch 1 oder 4, **dadurch gekennzeichnet, dass** er 30 bis 80 Gew.-% UD-Fasern enthält.

7. Verbundwerkstoff nach Anspruch 1 oder 4, **dadurch gekennzeichnet, dass** die Verstärkungsfaser-Rovings der Schicht A Glas-, Kohlenstoff-, Aramid- oder Basalt-Fasern mit einem Titer von 200 bis 4'800 tex sind.

8. Verbundwerkstoff nach Anspruch 1 oder 4, **dadurch gekennzeichnet, dass** der thermoplastische Kunststoff der Schicht B unmodifiziertes Polypropylen oder Polyamid-6 oder Polyamid-6,6 ist.

9. Verbundwerkstoff nach Anspruch 3, **dadurch gekennzeichnet, dass** die UD-*Fasern der Schicht A Kohlenstofffasern sind und die Faservlies-Schicht B* 30 bis 70 Gew.-% recyclierte Kohlenstofffasern und 70 bis 30 Gew.-% eines Polyamids enthält.

10. Kontinuierliches Verfahren zur Herstellung des Verbundwerkstoffs nach Anspruch 3, **dadurch gekennzeichnet, dass** man auf einem umlaufenden Endlos-Band (4) zunächst nebeneinander die UD-Fasern der Schicht A und darauf das Faservlies der Schicht B ablegt, und dass man anschliessend die Schichten A und B miteinander vernadelt.

11. Kontinuierliches Verfahren nach Anspruch 10 zur Herstellung des Verbundwerkstoffs nach Anspruch 4, **dadurch gekennzeichnet, dass** man, vor dem Vernadeln, auf die Schicht B die ungerichteten Fasern der Schicht C ablegt, und dass man anschliessend die Schichten A, B und C miteinander vernadelt.

12. Kontinuierliches Verfahren zur Herstellung des Verbundwerkstoffs nach Anspruch 5, **dadurch gekennzeichnet, dass** man auf einem umlaufenden Endlos-Band (4) zunächst die UD-Fasern der Schicht A und darauf aus traversierenden Feedern die Endlosfasern der Schicht B ablegt und anschliessend die Schichten A und B miteinander vernadelt.

13. Verwendung des Verbundwerkstoffs nach Anspruch 1 oder 3 zur Herstellung von Bauteilen durch Verpressen eines Zuschnitts aus dem Verbundwerkstoff in einer Form bei Temperaturen oberhalb des Erweichungspunktes des Thermoplasten der Wirrfaserschicht B.

14. Verwendung des Verbundwerkstoffs nach Anspruch 1 oder 3 zur Herstellung eines thermoplastisch umformbaren flächigen Halbzeugs durch Verpressen in einer Doppelbandpresse bei Temperaturen oberhalb des Erweichungspunktes des Thermoplasten der Wirrfaserschicht B.

15. Verwendung des Verbundwerkstoffs nach Anspruch 1 oder 3 zur Herstellung von Bauteilen durch Verpressen eines Zuschnitts aus dem Verbundwerkstoff zusammen mit einem GMT- oder NMT-Halbzeug in einer Form bei Temperaturen oberhalb des Erweichungspunktes des Thermoplasten der Wirrfaserschicht B.

## Claims

1. A planar composite material comprising
a) at least one UD fiber layer A having an areal weight of more than 300 to 2'000 g/m² made of discrete, unidirectional reinforcing fiber rovings (6) which are not connected to each other, and
b) at least one fiber mat with randomly oriented fibers B having an areal weight of 100 to 2'000 g/m² made of a thermoplastic fiber nonwoven (2) or a thermoplastic oriented fiber layer (16), each of which can contain up to 70 wt.-% reinforcing fibers
wherein the layers A and B are needled to each other.

2. The composite material according to claim 1, **characterized in** comprising the layer sequence A - B.

3. The composite material according to claim 1, **characterized in that** the fiber mat with randomly oriented fibers B is formed of a thermoplastic fiber nonwoven which is a needle nonwoven or a non-needled carding or airlay nonwoven which is formed of thermoplastic fibers and optionally contains 30 to 70 wt.-% reinforcing fibers.

4. The composite material according to claim 3, **characterized in that** it additionally contains, on the side of the layer B which is facing away from the layer A, a fiber layer C made of nondirectional reinforcing fibers having an areal weight of 50 to 500 g/m².

5. The composite material according to claim 1, **characterized in that** the fiber mat with randomly oriented fibers B is made of a thermoplastic oriented fiber layer of endless thermoplastic fibers and optionally contains endless reinforcing fibers.

6. The composite material according to claim 1 or 4, **characterized in that** it contains 30 to 80 wt.-% UD fibers.

7. The composite material according to claim 1 or 4, **characterized in that** the reinforcing fiber rovings of layer A are glass, carbon, aramide or basalt fibers with a titer of 200 to 4'800 tex.

8. The composite material according to claim 1 or 4, **characterized in that** the thermoplastic of layer B is unmodified polypropylene or polyamide-6 or polyamide-6,6.

9. The composite material according to claim 3, **characterized in that** the UD fibers of layer A are carbon fibers and that the fiber nonwoven layer B contains 30 to 70 wt.-% recycled carbon fibers and 70 to 30 wt.-% of a polyamide.

10. A continuous method for producing the composite material according to claim 3, **characterized in that** the UD fibers of layer A are initially arranged facing each other on a circulating endless band (4) and the fiber nonwoven of layer B is laid thereon, and that subsequently the layers A and B are needled to each other.

11. The continuous method according to claim 10 for producing the composite material according to claim 4, **characterized in that** prior to the needling the nondirectional fibers of layer C are laid onto the layer B, and that subsequently the layers A, B and C are needled to each other.

12. The continuous method for producing of the composite material according to claim 5, **characterized in that** the UD fibers of layer A are initially arranged on a circulating endless band (4) and the endless fibers of layer B are laid thereon from traversing feeders, and that subsequently the layers A and B are needled to each other.

13. Use of the composite material according to claim 1 or 3 for producing components by pressing of a pre-cut part made of the composite material in a mold at temperatures above the softening point of the thermoplastic of randomly oriented fiber layer B.

14. Use of the composite material according to claim 1 or 3 for producing a thermoplastically moldable planar semifinished product by pressing in a double band press at temperatures above the softening point of the thermoplastic of randomly oriented fiber layer B.

15. Use of the composite material according to claim 1 or 3 for producing components by pressing of a pre-cut part made of the composite material together with a GMT or NMT semifinished product in a mold at temperatures above the softening point of the thermoplastic of randomly oriented fiber layer B.

## Revendications

1. °) Matériau composite plat comprenant :
a) au moins une couche A de fibres unidirectionnelles UD ayant un poids surfacique de plus de 300 à 2000 g /m² constitué de fibres textiles de renfort roving (6) discrètes unidirectionnelles non reliées entre elles, et
b) une couche B de fibres désordonnées ayant un poids surfacique de 100 à 2000 g/m² en un voile de fibres thermoplastiques (2) ou un matelas de fibres thermoplastiques (16) qui peuvent respectivement renfermer jusqu'à 70% en poids de fibres de renfort,
les couches A et B étant aiguilletées l'une avec l'autre.

2. °) Matériau composite conforme à la revendication 1,
**caractérisé en ce qu'**
il présente la succession de couches A-B.

3. °) Matériau composite conforme à la revendication 1,
**caractérisé en ce que**
la couche de fibres désordonnées B est formée par un voile de fibres thermoplastiques qui est constitué par un voile aiguilleté ou un voile cardé ou airlay non aiguilleté qui est formé par des fibres thermoplastiques et renferme le cas échéant 30 à 70% en poids de fibres de renfort.

4. °) Matériau composite conforme à la revendication 3,
**caractérisé en ce qu'**
il renferme en outre une couche de fibres C en fibres de renfort non orientées ayant un poids surfacique de 50 à 500 g/m² sur la face de la couche B située à l'opposé de la couche A.

5. °) Matériau composite conforme à la revendication 1,
**caractérisé en ce que**
la couche B de fibres désordonnées est formée par un matelas de fibres thermoplastiques obtenu à partir de fibres thermoplastiques sans fin et renferme le cas échéant des fibres de renfort sans fin.

6. °) Matériau composite conforme à la revendication 1 ou 4,
**caractérisé en ce qu'**
il renferme entre 30 et 80% en poids de fibres UD.

7. °) Matériau composite conforme à la revendication 1 ou 4,
**caractérisé en ce que**
les fibres de renfort textile roving de la couche A sont des fibres de verre, de carbone, d'aramide ou de basalte ayant un titre de 200 à 4800 tex.

8. °) Matériau composite conforme à la revendication 1 ou 4,
**caractérisé en ce que**
le matériau thermoplastique de la couche B est du polypropylène non modifié ou du polyaramide-6 ou du polyaramide-6,6.

9. °) Matériau composite conforme à la revendication 3,
**caractérisé en ce que**
les fibres UD de la couche A sont des fibres de carbone et la couche B en voile de fibres renferme 30 à 70% en poids de fibres de carbone recyclées et 70 à 30% en poids d'un polyamide.

10. °) Procédé d'obtention en continu d'un matériau composite conforme à la revendication 3,
**caractérisé en ce qu'**
on dépose sur une bande sans fin (4) mobile en rotation tout d'abord côte à côte les fibres UD de la couche A et sur celles-ci le voile de fibres de la couche B, puis on effectue l'aiguilletage des couches A et B entre elles.

11. °) Procédé d'obtention en continu d'un matériau composite conforme à la revendication 4, selon la revendication 10,
**caractérisé en ce qu'**
avant l'étape d'aiguilletage on dépose sur la couche B les fibres non orientées de la couche C puis on effectue l'aiguilletage des couches A, B et C entre elles.

12. °) Procédé d'obtention en continu d'un matériau composite conforme à la revendication 5,
**caractérisé en ce qu'**
on dépose sur une bande sans fin (4) mobile en rotation tout d'abord les fibres UD de la couche A, et sur celles-ci, les fibres sans fin de la couche B à partir d'une alimentation transversale puis on effectue l'aiguilletage des couches A et B entre elles.

13. °) Utilisation d'un matériau composite conforme à la revendication 1 ou 3, pour l'obtention de pièces par compactage d'une découpe du matériau composite dans un moule à des températures situées au-dessus du point de ramollissement du matériau thermoplastique de la couche de fibres désordonnées B.

14. °) Utilisation d'un matériau composite conforme à la revendication 1 ou 3, pour l'obtention d'un produit semi-fini plat moulable thermoplastique par compactage dans une presse à double bande à des températures situées au-dessus du point de ramollissement du matériau thermoplastique de la couche de fibres désordonnées B.

15. °) Utilisation d'un matériau composite conforme à la revendication 1 ou 3, pour l'obtention de pièces par compactage d'une découpe du matériau composite avec un produit semi-fini GMT ou NMT dans un moule à des températures situées au-dessus du point de ramollissement du matériau thermoplastique de la couche de fibres désordonnées B.
